**Europäisches Patentamt**

**European Patent Office**

**Office européen des brevets**

(19)

(11) Veröffentlichungsnummer: **0 007 640**
A1

(12) # EUROPÄISCHE PATENTANMELDUNG

(21) Anmeldenummer: **79102691.7**

(22) Anmeldetag: **28.07.79**

(51) Int. Cl.³: **B 62 K 19/22**
**B 62 K 19/28**

(30) Priorität: **31.07.78 DE 7822966 U**

(43) Veröffentlichungstag der Anmeldung:
**06.02.80 Patentblatt 80/3**

(84) Benannte Vertragsstaaten:
**CH FR GB IT NL**

(71) Anmelder: **Firma Ernst Kleinebenne**
**Hansastrasse 8-18**
**D-4811 Leopoldshöhe(DE)**

(72) Erfinder: **Kleinebenne, Dieter**
**Dornberger Strasse 225**
**D-4800 Bielefeld 1(DE)**

(72) Erfinder: **Kleinebenne, Fred**
**Dornberger Strasse 213a**
**D-4800 Bielefeld 1(DE)**

(74) Vertreter: **Hoefer, Theodor, Dipl.-Ing.**
**Kreuzstrasse 32**
**D-4800 Bielefeld(DE)**

(54) **Fahrradrahmen.**

(57) Fahrradrahmen mit einer Muffenverbindung der Rohr-rahmen (2), bei der in die Muffe (1) ein separater Rohrstutzen (3) einfaßt, über dessen konischen Ansatz (3a) das Rahmen-rohr (2) mit einer inneren Abschrägung (2a) unter Klebverbin-dung (4) faßt.

Fig. 1

EP 0 007 640 A1

**Patentanwalt**

# Dipl.-Ing. Th. Hoefer

4800 Bielefeld 1, den
Kreuzstraße 32
Telefon (0521) 171072 - Telex 9-32449
Bankkonten: Commerzbank AG, Bielefeld 6851471 (BLZ 48040035)
Sparkasse Bielefeld 72001563 (BLZ 48050161)
Postscheckkonto: Amt Hannover 68928-304

diess. Akt.Z.:   E  6

Firma Ernst Kleinebenne, Hansastr. 8-18, 4811 Leopoldshöhe

Fahrradrahmen

Die Erfindung bezieht sich auf einen Fahrradrahmen o.dgl.

Der Rahmen des Fahrrades (Zweirad, Dreirad) besteht aus vorzugsweise mehreren Rohren von vorbestimmter Länge, die über Muffen verbunden sind. Der Fachmann spricht von Steuerkopfmuffen, Sattelmuffen oder Tretlagergehäusemuffen.

Beim Fahrrad trägt der sogenannte Steuerkopf

- 2 -

zwei, im Abstand untereinanderliegende Muffen, wobei die obere Muffe des Steuerkopfes und die Sattelmuffe das querliegende Rohr des Rahmens aufnehmen, während die untere Muffe des Steuerkopfes das von der Tretlagergehäusemuffe schräg nach oben ragende Rohr aufnimmt. Die obere Muffe in einer nach unten verlaufenden Abwinkelung, mit Richtung zum Tretlagergehäuse.

Das Tretlagergehäuse ist gleichfalls mit zwei Muffen ausgestattet, wobei diese beiden Muffen einen Winkel von etwa 90° einschließen. Wie bereits ausgeführt, nimmt die eine Muffe das vom Steuerkopf kommende Rohr auf, wohingegen die andere Muffe über ein in etwa senkrecht nach oben verlaufendes Rohr die Verbindung zur Sattelmuffe herstellt. Tretlagergehäuse und Sattelmuffe weisen in an sich bekannter Weise die Gabelteile für die Aufhängung des Hinterrades auf. Der Steuerkopf trägt die Lenkeinrichtung und die Vorderradgabel.

Bei den zum Stand der Technik zählenden Fahrradrahmen bestehen die Muffen aus Stahl und ihre Verbindung mit den rahmenbildenden Rohren einerseits und dem Steuerkopf bzw. Tretlagergehäuse andererseits erfolgt mittels einer sogenannten Lötung.

Nun hat es sich aber gezeigt, daß die vorbeschriebene Art der Verbindung zwischen den Muffen und den drei Rahmenrohren nicht als Optimum angesehen werden kann. Dieses liegt darin, daß die den Rahmen bildenden Rohre über einen relativ kurzen Abschnitt in die betreffenden Muffen eingelötet werden. Demzufolge können in diesen Verbindungsbereichen Bruchstellen auftreten, weil von einer, den Erfordernissen notwendigen Festigkeit nicht gesprochen werden kann.

Auch kann dieses Löten als solches als nachteilig angesehen werden, denn hier wird ein Gerät zum Schmelzen
des Lots (Lötmetall) in Form eines Lötkolbens od. dgl.
erforderlich und der gesamte Lötvorgang ist umständlich,
zumal sich ein erheblicher Zeitaufwand einstellt. Diese
Nachteile dürften jedoch im Zeichen der allgemeinen
Rationalisierung, die ihren Einzug auch in die Zweiradindustrie gehalten hat, keinen Platz mehr finden.

In Kenntnis des Aufgezeigten liegt der Erfindung die Aufgabe zugrunde, auf dem Gebiet der Fahrradrahmen eine erhebliche Neuerung aufzuzeigen, die hinsichtlich der Verbindung zwischen den Muffen und den eigentlichen Rahmenrohren einen völlig neuen Weg beschreitet.

Nach der Erfindung ist eine schnelle und saubere Montage
der Rohre mit den Muffen gegeben, und zwar unter Einbeziehung einer erhöhten Festigkeit im Verbindungsbereich.

Die gestellte Aufgabe wird erfindungsgemäß bei einem
Fahrradrahmen dadurch gelöst, daß jede Muffe als Verbindungsteil zum Rahmenrohr einen separaten Rohrstutzen aufweist, wobei dieser Rohrstutzen als tragendes Element für
das Rahmenrohr, einen aus der Muffe herausragenden
konischen Ansatz besitzt, während das Rahmenrohr in
seinem Endbereich innen mit einer dem konischen Ansatz
angepaßten umlaufenden Abschrägung ausgestattet ist, und
für die Verbindung von Rahmenrohr und Rohrstutzen zwischen
dem konischen Ansatz und der Abschrägung eine Schicht aus
einem Metallkleber od. dgl. angeordnet ist.

- 4 -

Der Rohrstutzen ist mit der betreffenden Muffe mittels Schweißen, Löten, Pressen od. dgl. zu einer unlösbaren Einheit verbunden.

Ein weiteres Merkmal der Erfindung liegt darin, daß der konische Ansatz des Rohrstutzens über seine gesamte Länge oder einen Teil derselben eine Anzahl von Ringnuten, eine Spiralnut od. dgl., die der Vergrößerung der Klebefläche dienlich sind, aufweist.

Es ist als bevorzugt vorgesehen, daß der Rohrstutzen in der Verlängerung des konischen Ansatzes einen weiteren, zylindrischen Ansatz aufweist, der in seinem Außendurchmesser dem Innendurchmesser des Rahmenrohres angepaßt ist und wobei hier gleichfalls eine Metallkleber-Schicht angebracht ist.

Die zwischen den Ansätzen des Rohrstutzens und dem Rahmenrohr sich befindliche Schicht aus Metallkleber weist eine Stärke von 5o bis 3oo $\mu$ auf.

Während der Rohrstutzen mit seinen Ansätzen aus Stahl besteht, ist das damit verbindbare Rahmenrohr aus Leichtmetall, vorzugsweise Aluminium, hergestellt.

Nach der Erfindung weist die endseitig im Rahmenrohr liegende Abschrägung eine Anzahl von Quertiefen od. dgl. auf, wobei dieselben in einer bevorzugten Weise deckungsgleich zu den Ringnuten im konischen Ansatz des Rohrstutzens angeordnet sind.

Die nachstehende Beschreibung dient der Erläuterung des Gegenstandes der Erfindung, von dem ein Ausführungsbeispiel in der Zeichnung dargestellt ist. Es zeigt hierbei:

Fig. 1    einen aus den drei Rohren, Steuerkopf, Tretlagergehäuse und Muffen gebildeten Rahmen und

Fig. 2    eine vergrößerte Darstellung nach A in Fig. 1.

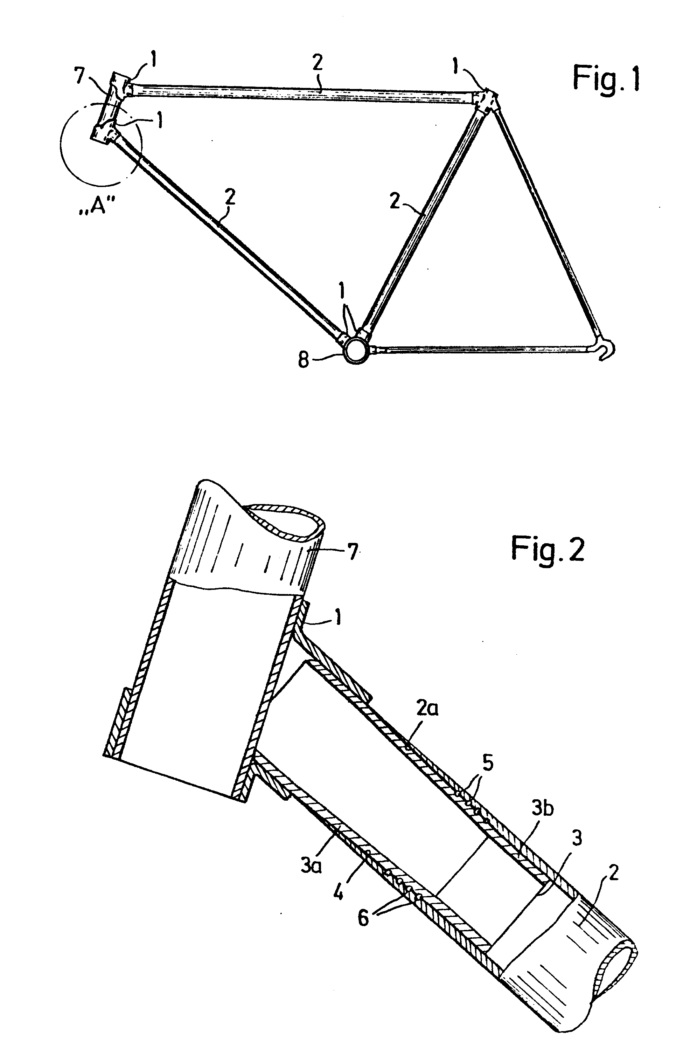

Wie in dem Schutzbegehren bereits herausgestellt, ist das erfindungsgemäße in der Verbindung von Muffe und Rahmenrohr 2 zu erblicken. In diesem Zusammenhang ist in die jeweilige Muffe 1 (Steuerkopfmuffe, Sattelmuffe und Centermuffe) ein Rohrstutzen 3 eingelötet, geschweißt oder angepreßt, siehe Fig. 2. Dieser Rohrstutzen 3 ist erfindungsgemäß mit einem konischen Ansatz 3a versehen, während das betreffende Rahmenrohr 2 innenseitig eine diesem Ansatz 3 entsprechende Abschrägung 2a aufweist. Der Rohrstutzen 3 mit seinem konischen Ansatz 3a bilden das tragende Element für das Rahmenrohr 2. Es ist die Möglichkeit gegeben, daß sich dem konischen Ansatz 3a ein weiterer Ansatz 3b in zylindrischer Form anschließt. Dieser Ansatz 3b ist in seinem Außendurchmesser dem Innendurchmesser des Rahmenrohres 2 angepaßt.

Die einzelnen Muffen 1 mit eingebrachtem Rohrstutzen 3,3a,3b, können ihre Anordnung am Steuerkopf 7 und am Tretlagergehäuse 8 finden, so daß hier von einer Vormontage gesprochen werden kann.

Die eloxierten oder oberflächenbehandelten Rohre 2 für die Rahmenbildung werden nun wie folgt mit der Muffe 1 verbunden:

Der konische Ansatz 3a des Rohrstutzens 3 wird über die gesamte Mantelfläche mit einem Metallkleber versehen. Das gleiche trifft für den zylindrischen Ansatz 3b zu, falls ein solcher vorhanden. Nunmehr wird das Rahmenrohr 2 auf den konischen Ansatz 3a aufgeschoben, und zwar soweit, bis das Rahmenrohr 2 vor die Muffe 1 anliegt. In jedem Fall kann die Klebefläche beliebig groß und darum unbedingt haltbar gestaltet werden. Die Lage von Rohrstutzen 3 mit seinem konischen Ansatz 3a und zylindrischen Ansatz 3b im Verhältnis zu dem betreffenden Rahmenrohr 2 veranschaulicht die zeichnerische Darstellung in der Figur 2.

Um nun die Klebefläche zwischen den Ansätzen 3a,3b, des Rohrstutzens 3 und der Abschrägung 2a im Rahmenrohr 2 noch größer zu gestalten, sind die beiden Ansätze 3a,3b mit Ringnuten 5 ausgerüstet, während in der Abschrägung 2a Quertiefen 6 eingearbeitet sind. Diese Ringnuten 5 und Quertiefen 6 nehmen Klebemasse auf. Neben der Vergrößerung der Klebefläche stellt sich auch eine erhöhte Festigkeit zwischen den verklebten Teilen, d.h. Rohrstutzen 3 und Rahmenrohr 2 ein.

Es darf an dieser Stelle angeführt werden, daß der Rohrstutzen 3 in seinen Abmessungen, dieses trifft insbesondere für den konischen Ansatz 3a zu, so beschaffen ist, daß der Belastbarkeit des Rahmens als solchen Rechnung getragen worden ist. Die Stärke der Schicht 4 aus Metallkleber liegt in etwa zwischen 5o und 3oo $\mu$. Die Schichtstärke kann aber auch anders gewählt werden, denn es wäre ja auch noch zu berücksichtigen, ob der Rahmen später für ein Herren-, Damen- oder Kinderfahrrad seine Verwendung finden soll.

Der Schutz als solcher wird nicht nur für die Merkmale der einzelnen Ansprüche geltend gemacht, sonder auch auf deren Kombination. Zum anderen läßt der erfindungsgemäße Gegenstand einige Varianten zu, ohne daß der Rahmen der Erfindung hierbei verlassen wird.

- 8 -

Patentansprüche

1. Fahrradrahmen mit Muffenverbindung, dadurch gekennzeichnet, daß jede Muffe (1) als Verbindungsteil
   zum Rahmenrohr (2) einen separaten Rohrstutzen (3)
   aufweist, als tragendes Element für das Rahmenrohr
   (2), einen aus der Muffe (1) herausragenden konischen
   Ansatz (3a) besitzt, und das Rahmenrohr (2) innen in
   seinem Endbereich mit einer dem konischen Ansatz (3a)
   angepaßten umlaufenden Abschrägung (2a) ausgestattet
   ist, und für die Verbindung von Rahmenrohr (2) und
   Rohrstutzen (3) zwischen dem konischen Ansatz (3a)
   und der Abschrägung (2a) eine Schicht (4) aus einem
   Metallkleber od. dgl. angeordnet ist.

2. Fahrrad nach Anspruch 1, dadurch gekennzeichnet, daß
   der Rohrstutzen (3) mit der Muffe (1) mittels
   Schweißen, Löten, Pressen od. dgl. zu einer unlösbaren Einheit verbunden ist.

3. Fahrrad nach den Ansprüchen 1 und 2, dadurch gekennzeichnet, daß der konische Ansatz (3a) des Rohrstutzens (3) über seine gesamte Länge oder seine Teillänge eine der Anzahl von Ringnuten (5), eine Vergrößerung der Klebefläche dienende Spiralnut od. dgl. aufweist.

4. Fahrrad nach den Ansprüchen 1 bis 3, gekennzeichnet dadurch, daß der Rohrstutzen (3) in Verlängerung des
   konischen Ansatzes (3a) einen weiteren, zylindrischen
   Ansatz (3b) aufweist, wobei derselbe (3b) mit seinem
   Außendurchmesser dem Innendurchmesser des Rahmenrohres

(2) angepaßt und in diesem Bereich gleichfalls eine Schicht (4) aus Metallkleber vorhanden ist.

5. Fahrrad nach den Ansprüchen 1 bis 4, dadurch gekennzeichnet, daß die zwischen den Ansätzen (3a,3b) des Rohrstutzens (3) und dem Rahmenrohr (2) eingebrachte Schicht (4) aus Metallkleber eine Stärke von 5o bis 3oo ,u aufweist.

6. Fahrrad nach den Ansprüchen 1 bis 5, dadurch gekennzeichnet, daß der Rohrstutzen (3) mit seinen Ansätzen (3a,3b) aus Stahl besteht, während das damit verbindbare Rahmenrohr (2) aus Leichtmetall, vorzugsweise aus Aluminium, hergestellt ist.

7. Fahrrad nach den Ansprüchen 1 bis 6, dadurch gekennzeichnet, daß die im Rahmenrohr (2) endseitig liegende Abschrägung (2a) Quertiefen (6) oder dgl. aufweist, wobei dieselben (6) vorzugsweise deckungsgleich zu den Ringnuten (5) im konischen Ansatz (3a) des Rohrstutzens (3) angeordnet sind.

000764

Fig.1

"A"

Fig.2

0007640

| Kategorie | Kennzeichnung des Dokuments mit Angabe, soweit erforderlich, der maßgeblichen Teile | betrifft Anspruch |
|---|---|---|
| | DE - C - 825 500 (FELDMANN)<br><br>* Einzige Figur; Seite 2, Zeilen 64-110 * | 1,2 |
| | -- | |
| | US - A - 2 024 782 (SCHWINN)<br><br>* Figuren 1,2; Seite 1, Zeilen 1-49 * | 1,2 |
| | -- | |
| | DE - C - 801 888 (FROLICH)<br><br>* Figur 3; Seite 3, Zeilen 28-67 * | 1 |
| | ---- | |

**EINSCHLÄGIGE DOKUMENTE**

**KLASSIFIKATION DER ANMELDUNG (Int.Cl. ³)**

B 62 K 19/22
19/28

**RECHERCHIERTE SACHGEBIETE (Int. Cl. ³)**

B 62 K

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-10-1979 | VANNESTE |

EPA form 1503.1  06.78